# EUROPEAN PATENT APPLICATION

(11) **EP 4 539 187 A1**
(43) Date of publication of application: **16.04.2025**
(21) Application number: 24205765.1
(22) Date of filing: 10.10.2024
(51) Int. Cl.: H01M 10/0525, H01M 10/0567, H01M 10/0569, H01M 10/42, H01M 50/414, H01M 50/417, H01M 50/42, H01M 50/426, H01M 50/431, H01M 50/451, H01M 50/457

(54) **ELECTROCHEMICAL APPARATUS AND ELECTRONIC APPARATUS**

(30) Priority: 10.10.2023 CN 202311309383
(71) Applicant: Ningde Amperex Technology Ltd., Ningde City, Fujian 352100 (CN)
(72) Inventor: FAN, Xiaohe, Ningde City, Fujian Province, People s Republic of China, 352100 (CN); WEI, Zengbin, Ningde City, Fujian Province, People s Republic of China, 352100 (CN)
(74) Representative: Icosa

(57) **Abstract**

An electrochemical apparatus includes an electrolyte, a positive electrode plate, a negative electrode plate, and a separator. The separator is disposed between the positive electrode plate and the negative electrode plate. The separator includes a substrate and a first coating provided on both surfaces of the substrate. The first coating includes polymer particles. In an 11.5 µm × 7.5 µm region of a surface of the first coating, a quantity Q of the polymer particles is 10 to 90. The electrolyte includes substituted or unsubstituted C₃-C₈ linear carboxylate, and in a case of substitution, a substituent group is selected from halogen atoms. A mass percentage B of the linear carboxylate is 5% to 50% based on a mass of the electrolyte.

## Description

### TECHNICAL FIELD

This application relates to the field of electrochemical technologies, and in particular, to an electrochemical apparatus and an electronic apparatus.

### BACKGROUND

With the popularity of electronic products such as notebook computers, mobile phones, handheld game consoles, and tablet computers, people have imposed increasingly stringent requirements on electrochemical apparatuses (for example, lithium-ion batteries). Lithium-ion batteries have been widely used in the fields such as electric energy storage, portable electronic devices, and electric vehicles due to their characteristics such as large energy density, high working voltage, low self-discharge rate, small size, and light weight. However, existing lithium-ion batteries are prone to technical problems such as poor kinetic performance or poor storage performance. Therefore, how the kinetic performance and storage performance of lithium-ion batteries are balanced has become an urgent technical issue that needs to be addressed by persons skilled in the art.

### SUMMARY

An objective of this application is to provide an electrochemical apparatus and an electronic apparatus to balance the kinetic performance and storage performance of the electrochemical apparatus.

It should be noted that in the content of the invention of this application, an example in which a lithium-ion battery is used as an electrochemical apparatus is used to explain this application. However, the electrochemical apparatus of this application is not limited to the lithium-ion battery. Specific technical solutions are as follows.

A first aspect of this application provides an electrochemical apparatus. The electrochemical apparatus includes an electrolyte, a positive electrode plate, a negative electrode plate, and a separator. The separator is disposed between the positive electrode plate and the negative electrode plate. The separator includes a substrate and a first coating provided on both surfaces of the substrate. The first coating includes polymer particles. In an 11.5 µm × 7.5 µm region of a surface of the first coating, a quantity Q of the polymer particles is 10 to 90. The electrolyte includes substituted or unsubstituted C₃-C₈ linear carboxylate, and in a case of substitution, a substituent group is selected from halogen atoms. A mass percentage B of the linear carboxylate is 5% to 50% based on a mass of the electrolyte. In this application, the quantity Q of the polymer particles in the first coating and the percentage of the linear carboxylate are regulated within the range provided in this application, so that the separator has high adhesivity, allowing for good interface contact between the separator and the positive electrode plate as well as between the separator and the negative electrode plate in the electrochemical apparatus. In addition, the separator has good wettability and the electrolyte has good infiltration performance, increasing a quantity of lithium ion circulation channels, thereby improving a transport rate of lithium ions. The separator and electrolyte of this application work synergistically to further improve the interface contact of the electrochemical apparatus. The electrolyte has good infiltration performance on the separator, positive electrode plate, and negative electrode plate, balancing the kinetic performance and storage performance of the electrochemical apparatus.

In an embodiment of this application, in an 11.5 µm × 7.5 µm region of a surface of the first coating, the quantity Q of the polymer particles is 30 to 80. Regulating the quantity of the polymer particles within the above range can further improve the kinetic performance and storage performance of the electrochemical apparatus.

In an embodiment of this application, a diameter of the polymer particles is 0.2 µm to 3 µm. Regulating the diameter of the polymer particles within the above range helps to regulate the quantity of the polymer particles in the first coating within the range provided in this application, thereby balancing the kinetic performance and storage performance of the electrochemical apparatus.

In an embodiment of this application, the polymer particles are formed by polymerization of at least two of the following monomers: butadiene, methyl acrylate, methyl methacrylate, styrene, butyl methacrylate, isobutyl acrylate, ethylhexyl acrylate, ethylene, propylene, vinylidene fluoride.

In an embodiment of this application, a degree of swelling of the polymer particles in a test electrolyte is 100% to 135%. This indicates that the polymer particles have a low degree of swelling. Regulating the degree of swelling of the polymer particles within the above range helps to improve the energy density and storage performance of the electrochemical apparatus while providing the electrochemical apparatus with good kinetic performance.

In an embodiment of this application, the linear carboxylate includes at least one of methyl acetate, ethyl acetate, butyl butyrate, propyl acetate, ethyl propionate, propyl propionate, butyl propionate, pentyl propionate, methyl fluoroacetate, ethyl fluoroacetate, or ethyl chloroacetate.

In an embodiment of this application, an air permeability P₁ of the substrate is 50 s/100cm³ to 200 s/100cm³, and an air permeability P₂ of the separator and the air permeability P₁ of the substrate satisfy: 15 s/100cm³ ≤ P₂ - P₁ ≤ 30 s/100cm³. Regulating the air permeability of the substrate and a value of P₂ - P₁ within the above range ensures that the substrate has good air permeability and also facilitates the infiltration of the electrolyte to the separator, thereby balancing the kinetic performance and storage performance of the electrochemical apparatus.

In an embodiment of this application, the value of an adhesion force A of the first coating and the mass percentage B of the linear carboxylate satisfy: 10 ≤ A/B ≤ 60.

In an embodiment of this application, the electrolyte further includes a dinitrile compound, the dinitrile compound includes at least one of succinonitrile, glutaronitrile, methylglutaronitrile, adiponitrile, pimelonitrile, suberonitrile, azelonitrile, or sebaconitrile, and a mass percentage of the dinitrile compound is 0.5% to 5% based on the mass of the electrolyte. Adding the above types and percentages of dinitrile compounds into the electrolyte can reduce by-products (such as gas and impurities) generated by decomposition of the electrolyte, thereby improving the storage performance of the electrochemical apparatus while the electrochemical apparatus has good kinetic performance.

A second aspect of this application provides an electronic apparatus, where the electronic apparatus includes the electrochemical apparatus according to any one of the foregoing embodiments. Therefore, the electronic apparatus has good use performance.

This application has the following beneficial effects.

This application provides an electrochemical apparatus and an electronic apparatus. The electrochemical apparatus includes an electrolyte, a positive electrode plate, a negative electrode plate, and a separator. The separator is disposed between the positive electrode plate and the negative electrode plate. The separator includes a substrate and a first coating provided on both surfaces of the substrate. The first coating includes polymer particles. In an 11.5 µm × 7.5 µm region of a surface of the first coating, a quantity Q of the polymer particles is 10 to 90. The electrolyte includes substituted or unsubstituted C₃-C₈ linear carboxylate, and in a case of substitution, a substituent group is selected from halogen atoms. A mass percentage B of the linear carboxylate is 5% to 50% based on a mass of the electrolyte. In this application, the quantity Q of the polymer particles in the first coating and the percentage of the linear carboxylate are regulated within the range provided in this application, so that the separator has high adhesivity, allowing for good interface contact between the separator and the positive electrode plate as well as between the separator and the negative electrode plate in the electrochemical apparatus. In addition, the separator has good wettability and the electrolyte has good infiltration performance, increasing a quantity of lithium ion circulation channels, thereby improving a transport rate of lithium ions. The separator and electrolyte of this application work synergistically to further improve the interface contact of the electrochemical apparatus and can achieve better infiltration and transport on surfaces of the separator, positive electrode plate, and negative electrode plate, thereby balancing the kinetic performance and storage performance of the electrochemical apparatus.

Certainly, when any product or method of this application is implemented, all advantages described above are not necessarily demonstrated simultaneously.

### BRIEF DESCRIPTION OF DRAWINGS

To describe the technical solutions in some embodiments of this application more clearly, the following briefly describes the accompanying drawings required for describing some embodiments. Apparently, the accompanying drawings in the following descriptions show merely some embodiments of this application, and persons of ordinary skill in the art may still derive others drawings from these accompanying drawings.
FIG. 1 is a schematic cross-sectional structural diagram of a separator according to an embodiment of this application in its thickness direction;
FIG. 2 is a scanning electron microscope (SEM) photograph of a first coating according to some embodiments of this application; and
FIG. 3 is a schematic cross-sectional structural diagram of a separator according to another embodiment of this application in its thickness direction.

### DETAILED DESCRIPTION

The following clearly describes the technical solutions in some embodiments of this application with reference to the accompanying drawings in some embodiments of this application. Apparently, the described embodiments are only some rather than all of the embodiments of this application. All other embodiments obtained by persons skilled in the art based on this application shall fall within the protection scope of this application.

It should be noted that, in the specific embodiments of this application, an example in which a lithium-ion battery is used as an electrochemical apparatus is used to illustrate this application. However, the electrochemical apparatus of this application is not limited to the lithium-ion battery.

A first aspect of this application provides an electrochemical apparatus. The electrochemical apparatus includes an electrolyte, a positive electrode plate, a negative electrode plate, and a separator. The separator is disposed between the positive electrode plate and the negative electrode plate. The separator includes a substrate and a first coating provided on both surfaces of the substrate. The first coating includes polymer particles. In an 11.5 µm × 7.5 µm region of a surface of the first coating, a quantity Q of the polymer particles is 10 to 90. The electrolyte includes substituted or unsubstituted C₃-C₈ linear carboxylate, and in a case of substitution, a substituent group is selected from halogen atoms. A mass percentage B of the linear carboxylate is 5% to 50% based on a mass of the electrolyte. In this application, the halogen atoms include F, Cl, Br, or I.

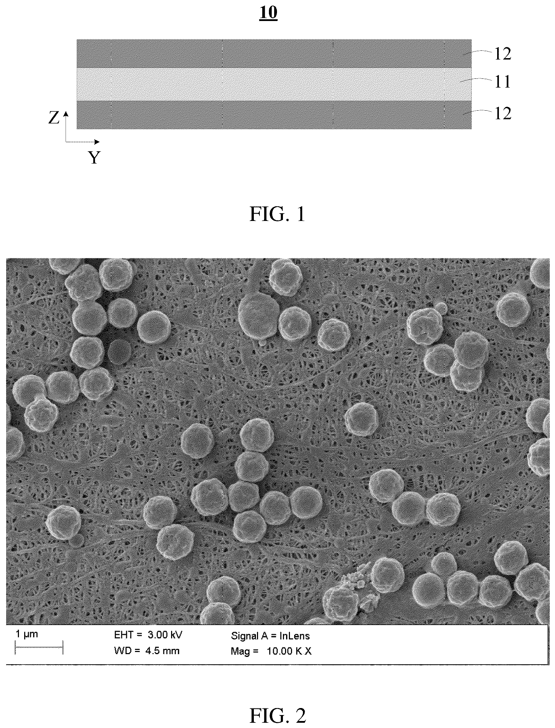

For convenience of understanding, in this application, a length direction of the separator is defined as Y, and a thickness direction of the separator is defined as Z. It should be understood that the above definitions of direction are for ease of describing this application, and the directions defined in this application can be understood based on the accompanying drawings and relative position of actual product elements. Moreover, the length direction and thickness direction of the substrate and first coating are the same as those of the separator. As shown in FIG. 1, the separator 10 includes a substrate 11 and a first coating 12 provided on both surfaces of the substrate 11.

For example, Q is 10, 20, 30, 40, 50, 60, 70, 80, 90, or any value within a range between any two of these values. In an 11.5 µm × 7.5 µm region of the surface of the first coating, the quantity Q of the polymer particles being less than 10 indicates that the quantity of the polymer particles in the first coating is too small and the adhesion force of the first coating is too low, leading to an excessively poor adhesion effect between the separator and the positive and negative electrode plates as well as excessively poor interface contact of the electrochemical apparatus, thereby affecting deintercalation and intercalation of lithium ions and in turn affecting the kinetic performance of the electrochemical apparatus. In an 11.5 µm × 7.5 µm region of the surface of the first coating, the quantity Q of the polymer particles being greater than 90 indicates that the quantity of the polymer particles in the first coating is too large, hindering the infiltration of the electrolyte to the separator and leading to difficult infiltration of the electrolyte, thereby affecting the kinetic performance and storage performance of the electrochemical apparatus. FIG. 2 shows a SEM photograph of the first coating in some embodiments of this application. It can be seen from FIG. 2 that in a surface region of the first coating, the polymer particles are evenly distributed, and the diameter of the polymer particles is 0.6 µm.

For example, B is 5%, 10%, 15%, 20%, 25%, 30%, 35%, 40%, 45%, 50%, or any value within a range between any two of these values. The linear carboxylate has low viscosity and good fluidity. If the mass percentage B of the linear carboxylate is less than 5%, the percentage of the linear carboxylate in the electrolyte is excessively low, so the low viscosity and good fluidity of the linear carboxylate are not obvious, the linear carboxylate fails to play its role, and the infiltration performance of the electrolyte is not obviously improved. If the mass percentage B of the linear carboxylate is greater than 50%, the percentage of the linear carboxylate in the electrolyte is excessively large, so the percentages of other components (such as a lithium salt and other non-aqueous organic solvents) in the electrolyte is excessively small, affecting other performance (such as storage performance and cycling performance) of the electrochemical apparatus.

In this application, the quantity Q of the polymer particles in the first coating and the percentage of the linear carboxylate are regulated within the range provided in this application, so that the separator has high adhesivity, allowing for good interface contact between the separator and the positive electrode plate as well as between the separator and the negative electrode plate in the electrochemical apparatus. In addition, the separator has good wettability and the electrolyte has good infiltration performance, increasing a quantity of lithium ion circulation channels, thereby improving a transport rate of lithium ions. The separator and electrolyte of this application work synergistically to further improve the interface contact of the electrochemical apparatus and can achieve better infiltration and transport on surfaces of the separator, positive electrode plate, and negative electrode plate, balancing the kinetic performance and storage performance of the electrochemical apparatus.

In an embodiment of this application, in an 11.5 µm × 7.5 µm region of the surface of the first coating, the quantity Q of the polymer particles is 30 to 80. For example, Q is 30, 40, 50, 60, 70, 80, or any value within a range between any two of these values. Regulating the quantity of the polymer particles within the above range can further improve the kinetic performance and storage performance of the electrochemical apparatus.

In this application, a method for regulating the quantity Q of the polymer particles in the 11.5 µm × 7.5 µm region of the surface of the first coating is not particularly limited, provided that the objective of this application can be achieved. For example, it can be achieved by regulating a coating weight of the first coating, the diameter of the polymer particles, a rotating speed of a coating machine, a viscosity of a first coating slurry, a solid content of the first coating slurry, and the like.

In an embodiment of this application, the diameter of the polymer particles is 0.2 µm to 3 µm. For example, the diameter of the polymer particles is 0.2 µm, 0.5 µm, 1 µm, 1.5 µm, 2 µm, 2.5 µm, 3 µm, or any value within a range between any two of these values. Regulating the diameter of the polymer particles within the above range helps to regulate the quantity of the polymer particles in the first coating within the range provided in this application, thereby improving the kinetic performance of the electrochemical apparatus.

In an embodiment of this application, the polymer particles are formed by polymerization of at least two of the following monomers: butadiene, methyl acrylate, methyl methacrylate, styrene, butyl methacrylate, isobutyl acrylate, ethylhexyl acrylate, ethylene, propylene, vinylidene fluoride. Choosing the above types of polymer particles helps to improve the adhesion force of the first coating, and since the electrolyte and the polymer particles have similar polarity, the contact effect between interfaces in the electrochemical apparatus can be further improved, thereby balancing the kinetic performance and storage performance of the electrochemical apparatus.

In an embodiment of this application, a degree of swelling of the polymer particles in a test electrolyte is 100% to 135%. For example, the degree of swelling is 100%, 110%, 120%, 130%, 135%, or any value within a range between any two of these values. This indicates that the polymer particles have a low degree of swelling. Thus, when the polymer particles are used in the separator, the separator has a low degree of swelling during use, reducing the possibility of energy density decrease of the electrochemical apparatus caused by volume increase of the electrochemical apparatus due to thickness increase of the separator caused by swelling, and also reducing the possibility of storage performance degradation caused by thickness swelling rate increase of the electrochemical apparatus. Therefore, regulating the degree of swelling of the polymer particles within the above range helps increase the energy density and storage performance of the electrochemical apparatus while the electrochemical apparatus has good kinetic performance.

A method for regulating the degree of swelling of the polymer particles in the test electrolyte in this application is not particularly limited, provided that the objective of this application can be achieved. For example, it can be achieved by regulating the type of the polymer particles.

In an embodiment of this application, the first coating further includes an auxiliary binder. Based on a mass of the first coating, a mass percentage of the polymer particles is 80% to 95%, and a mass percentage of the auxiliary binder is 0.5% to 20%. For example, the mass percentage of the polymer particles is 80%, 81%, 82%, 83%, 84%, 85%, 86%, 87%, 88%, 89%, 90%, 95%, or any value within a range between any two of these values. For example, the mass percentage of the auxiliary binder is 0.5%, 2%, 4%, 6%, 8%, 10%, 11%, 12%, 13%, 14%, 15%, 16%, 17%, 18%, 19%, 20%, or any value within a range between any two of these values. Regulating the percentages of the polymer particles and auxiliary binder in the first coating within the above ranges ensures that the first coating has good adhesion force and wettability, helping the electrochemical apparatus to have good kinetic performance and storage performance.

A type of auxiliary binder is not particularly limited in this application, provided that the objective of this application can be achieved. For example, the auxiliary binder includes but is not limited to at least one of polymethyl methacrylate, polyacrylonitrile, ethyl acrylate, butyl acrylate, ethyl methacrylate, styrene, chlorostyrene, fluorostyrene, methylstyrene, acrylic acid, methacrylic acid, maleic acid, acrylonitrile, or butadiene.

In an embodiment of this application, the first coating further includes a wetting agent, and a mass percentage of the wetting agent is 0% to 5% based on the mass of the first coating.

In an embodiment of this application, the linear carboxylate includes at least one of methyl acetate, ethyl acetate (EA), butyl butyrate, propyl acetate, ethyl propionate (EP), propyl propionate, butyl propionate, pentyl propionate, methyl fluoroacetate, ethyl fluoroacetate, or ethyl chloroacetate. The above types of linear carboxylate have low viscosity and good fluidity. Choosing the above types of linear carboxylate in the electrolyte can further improve the infiltration performance of the electrolyte, thereby further improving the kinetic performance and storage performance of the electrochemical apparatus.

In an embodiment of this application, an air permeability P₁ of the substrate is 50 s/100cm³ to 200 s/100cm³, and an air permeability P₂ of the separator and the air permeability P₁ of the substrate satisfy: 15 s/100cm³ ≤ P₂ - P₁ ≤ 30 s/100cm³. For example, the air permeability P1 of the substrate is 50 s/100cm³, 80 s/100cm³, 110 s/100cm³, 140 s/100cm³, 170 s/100cm³, 200 s/100cm³, or any value within a range between any two of these values. For example, a value of P₂ - P₁ is 15 s/100cm³, 20 s/100cm³, 25 s/100cm³, 30 s/100cm³, or any value within a range between any two of these values. The air permeability P₁ of the substrate and the value of P₂ - P₁ are regulated within the above ranges, indicating that the substrate has good air permeability. After the first coating is provided on the surface of the substrate, the first coating does not obviously reduce the air permeability of the separator, the separator has good air permeability, and the electrolyte can quickly infiltrate the separator, making the electrochemical apparatus have good kinetic performance and storage performance.

A method for regulating the air permeability P₁ of the substrate is not particularly limited in this application, provided that the objective of this application can be achieved. For example, it can be achieved by regulating the porosity of the substrate, the thickness of the substrate, and the like.

A method for regulating the air permeability of the separator is not particularly limited in this application, provided that the objective of this application can be achieved. For example, it can be achieved by regulating the air permeability of the substrate, the coating weight of the first coating, and the like.

In an embodiment of this application, the value of an adhesion force A of the first coating and the mass percentage B of the linear carboxylate satisfy: 10 ≤ A/B ≤ 60. For example, a value of A/B is 10, 20, 30, 40, 50, 60, or any value within a range between any two of these values. The value of A/B is regulated within the above range, so that a relative percentage relationship between the adhesion force A of the first coating and the mass percentage B of the linear carboxylate is appropriate, making the first coating have a large adhesion force and suitable degree of swelling. Thus, a good adhesion effect is achieved between the separator and the positive electrode plate as well as between the separator and the negative electrode plate, and the electrochemical apparatus has good kinetic performance and storage performance.

In an embodiment of this application, the electrolyte further includes a dinitrile compound, the dinitrile compound includes at least one of succinonitrile, glutaronitrile, methylglutaronitrile, adiponitrile, pimelonitrile, suberonitrile, azelonitrile, or sebaconitrile, and a mass percentage of the dinitrile compound is 0.5% to 5% based on the mass of the electrolyte. For example, the mass percentage of the dinitrile compound is 0.5%, 1%, 1.5%, 2%, 2.5%, 3%, 3.5%, 4%, 4.5%, 5%, or any value within a range between any two of these values. Adding the above types and percentages of dinitrile compounds into the electrolyte can inhibit dissolution of metal ions (such as Co⁺) in the positive electrode active material layer and form a stable molecular layer on the surface of the positive electrode active material, thereby inhibiting a decomposition reaction of the electrolyte. In this way, by-products (such as gas and impurities) generated by decomposition of the electrolyte can be reduced, thereby improving the storage performance of the electrochemical apparatus while the electrochemical apparatus has good kinetic performance.

The electrolyte of this application further includes a non-aqueous organic solvent and a lithium salt. Types and percentages of the non-aqueous organic solvent and lithium salt are not particularly limited in this application, provided that the objective of this application can be achieved. For example, based on the mass of the electrolyte, a mass percentage of the non-aqueous organic solvent is 30% to 84.5%, and a mass percentage of the lithium salt is 10% to 15%. For example, the non-aqueous organic solvent includes but is not limited to at least one of cyclic carbonate or linear carbonate. The cyclic carbonate includes but is not limited to at least one of propylene carbonate (also known as propylene carbonate, abbreviated as PC) or vinylene carbonate (VEC). The linear carbonate includes but is not limited to at least one of dimethyl carbonate (DMC), ethyl methyl carbonate (EMC), diethyl carbonate (DEC), methyl propyl carbonate (MPC), dicaprylyl carbonate, diamyl carbonate, ethyl isobutyl carbonate, isopropyl methyl carbonate, dibutyl carbonate, diisopropyl carbonate, or propyl carbonate. For example, the lithium salt includes but is not limited to at least one of LiPF₆, LiAsF₆, LiClO₄, LiB(C₆H₅)₄, LiCH₃SO₃, LiCF₃SO₃, LiN(SO₂CF₃)₂, LiC(SO₂CF₃)₃, or Li₂SiF₆.

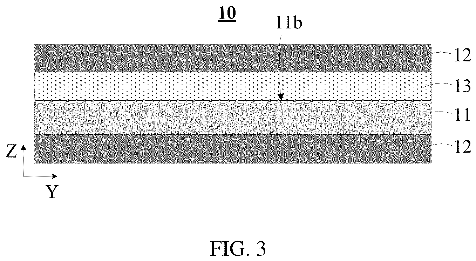

In an embodiment of this application, as shown in FIG. 3, the separator 10 further includes a heat-resistant layer 13, the heat-resistant layer 13 is provided on a surface 11b of the substrate 11 close to the positive electrode plate, and the heat-resistant layer 13 is disposed between the substrate 11 and the first coating 12. The heat-resistant layer includes inorganic particles and a binder. The inorganic particles include at least one of alumina, boehmite, titanium dioxide, silicon dioxide, zirconium dioxide, tin dioxide, magnesium hydroxide, magnesium oxide, zinc oxide, barium sulfate, boron nitride, or aluminum nitride. The binder includes at least one of acrylic acid, methyl methacrylate, butyl acrylate, octyl acrylate, ethylhexyl acrylate, butadiene, or acrylonitrile. Based on a mass of the heat-resistant layer, a mass percentage of the inorganic particles is 85% to 95%, and a mass percentage of the binder is 5% to 15%. For example, the mass percentage of the inorganic particles is 85%, 86%, 87%, 88%, 89%, 90%, 91%, 92%, 93%, 94%, 95%, or any value within a range between any two of these values. For example, the mass percentage of the binder is 5%, 6%, 7%, 8%, 9%, 10%, 11%, 12%, 13%, 14%, 15%, or any value within a range between any two of these values. During cycling of the electrochemical apparatus or when an internal short circuit occurs, a joint of a positive electrode tab usually tends to have a high temperature first. A heat-resistant layer is provided in the separator, the heat-resistant layer is provided on the surface of the substrate close to the positive electrode plate, and the heat-resistant layer is disposed between the substrate and the first coating. In addition, the percentages of the inorganic particles and binder in the heat-resistant layer are regulated within the above ranges, so when the electrochemical apparatus is at a high temperature (a temperature ≥ 130°C) and a protective adhesive on the positive electrode tab melts, the heat-resistant layer can avoid a large-area contact between the positive electrode tab and the negative electrode plate, reducing the risk of expanding the internal short circuit area of the electrochemical apparatus, thereby improving the thermal safety performance of the electrochemical apparatus while the electrochemical apparatus has good kinetic performance.

In an embodiment of this application, the heat-resistant layer further includes a wetting agent. A mass percentage of the wetting agent is 0% to 5% based on the mass of the heat-resistant layer.

A type of the wetting agent is not particularly limited in this application, provided that the objective of this application can be achieved. For example, the wetting agent includes but is not limited to at least one of polyoxyethylene ether or dimethylsiloxane.

In an embodiment of this application, D50 of the inorganic particles is 0.4 µm to 2 µm, and D90 is 0.8 µm to 3 µm. For example, the D50 of the inorganic particles is 0.4 µm, 0.6 µm, 0.8 µm, 1 µm, 1.2 µm, 1.4 µm, 1.6 µm, 1.8 µm, 2 µm, or any value within a range between any two of these values. For example, the D90 of the inorganic particles is 0.8 µm, 1 µm, 1.2 µm, 1.4 µm, 1.6 µm, 1.8 µm, 2 µm, 2.2 µm, 2.4 µm, 2.6 µm, 2.8 µm, 3 µm, or any value within a range between any two of these values. Regulating the D50 and D90 of the inorganic particles within the above ranges reduces the risk of the inorganic particles agglomerating in the heat-resistant layer and allows a thickness of the heat-resistant layer to be regulated within a suitable range while making the heat-resistant layer exert heat resistance, thereby helping the electrochemical apparatus to have good thermal safety performance while the electrochemical apparatus has good kinetic performance.

In this application, "D50" represents a particle size of the inorganic particles that reaches 50% of a cumulative volume from a small particle size side in volume-based particle size distribution. "D90" represents a particle size of the inorganic particles that reaches 90% of a cumulative volume from a small particle size side in volume-based particle size distribution.

The thickness of the heat-resistant layer is not limited in this application, provided that the objective of this application can be achieved. For example, the thickness of the heat-resistant layer is 0.5 µm to 5 µm.

The substrate in the separator is not particularly limited in this application, provided that persons skilled in the art can choose according to actual needs and the objective of this application can be achieved. For example, a material of the substrate may include but is not limited to at least one of polyethylene (PE), polypropylene (PP), or polyethylene terephthalate (PET). The substrate may be a single-layer structure or a multi-layer structure. For example, the multi-layer may mean two layers, three layers, or four layers. A thickness of the substrate may be 3 µm to 20 µm. A porosity of the substrate may be 20% to 50%. A pore size of the substrate may be 30 nm to 50 nm.

A preparation method of the separator is not particularly limited in this application, provided that the objective of this application can be achieved.

For example, in an embodiment, the preparation method of the separator may include but is not limited to the following steps: (1) well mixing the polymer particles and the auxiliary binder to obtain a first coating slurry with a solid content of 4wt% to 15wt%; and (2) coating two surfaces of the substrate with the first coating slurry, followed by drying to form a first coating, which is the separator.

For example, in another embodiment, the preparation method of the separator may include but is not limited to the following steps: (1) well mixing the inorganic particles and the binder to obtain a heat-resistant layer slurry with a solid content of 30wt% to 50wt%; (2) coating a surface of the substrate close to the positive electrode plate with the heat-resistant layer slurry, followed by drying to form the heat-resistant layer; (3) well mixing the polymer particles and the auxiliary binder to obtain a first coating slurry with a solid content of 4wt% to 15wt%; and (4) respectively coating a surface of the heat-resistant layer away from the substrate and a the surface of the substrate away from the positive electrode plate with the first coating slurry, followed by drying to form a first coating, which is the separator.

The positive electrode plate is not particularly limited in this application, provided that the objective of this application can be achieved. For example, the positive electrode plate includes a positive electrode current collector and a positive electrode active material layer. The positive electrode current collector is not particularly limited in this application, provided that the objective of this application can be achieved. For example, the positive electrode current collector may include aluminum foil, aluminum alloy foil, a composite current collector, or the like. The positive electrode active material layer in this application includes a positive electrode active material. A type of the positive electrode active material is not particularly limited in this application, provided that the objective of this application can be achieved. For example, the positive electrode active material may include at least one of lithium nickel cobalt manganate, lithium nickel cobalt aluminate, lithium iron phosphate, lithium-rich manganese-based material, lithium cobaltate, lithium manganate, lithium iron manganese phosphate, or lithium titanate. In this application, the positive electrode active material may further include a non-metal element, for example, the non-metal element includes at least one of fluorine, phosphorus, boron, chlorine, silicon, or sulfur. These elements can further improve stability of the positive electrode active material. In this application, thicknesses of the positive electrode current collector and the positive electrode active material layer are not particularly limited, provided that the objective of this application can be achieved. For example, the thickness of the positive electrode current collector is 5 µm to 20 µm, preferably 6 µm to 18 µm. A thickness of a one-sided positive electrode active material layer is 30 µm to 120 µm. In this application, the positive electrode active material layer may be disposed on one surface of the positive electrode current collector in a thickness direction, or may be disposed on two surfaces of the positive electrode current collector in the thickness direction. Optionally, the positive electrode active material layer may further include a positive electrode conductive agent and a positive electrode binder. The types of the positive electrode conductive agent and positive electrode binder in the positive electrode active material layer are not particularly limited in this application, provided that the objective of this application can be achieved. A mass ratio of the positive electrode active material, the positive electrode conductive agent, and the positive electrode binder in the positive electrode active material layer is not particularly limited in this application, and persons skilled in the art can choose according to actual needs, provided that the objective of this application can be achieved. For example, a mass ratio of the positive electrode active material, the positive electrode conductive agent, and the positive electrode binder in the positive electrode active material layer may be (97.5-97.9):(0.8-1.7):(1.0-2.0).

The negative electrode plate is not particularly limited in this application, provided that the objective of this application can be achieved. For example, the negative electrode plate includes a negative electrode current collector and a negative electrode active material layer. The negative electrode current collector is not particularly limited in this application, provided that the objective of this application can be achieved. For example, the negative electrode current collector may include copper foil, copper alloy foil, nickel foil, stainless steel foil, titanium foil, nickel foam, copper foam, or the like. The negative electrode active material layer in this application includes a negative electrode active material. A type of the negative electrode active material is not particularly limited in this application, provided that the objective of this application can be achieved. For example, the negative electrode active material may include at least one of natural graphite, artificial graphite, mesocarbon microbeads (MCMB), hard carbon, soft carbon, silicon, a silicon-carbon composite, SiOₓ (0<x<2), a Li-Sn alloy, a Li-Sn-O alloy, Sn, SnO, SnO₂, spinel-structure lithium titanate Li₄Ti₅O₁₂, a Li-Al alloy, or lithium metal. Thicknesses of the negative electrode current collector and the negative electrode active material layer are not particularly limited in this application, provided that the objective of this application can be achieved. For example, the thickness of the negative electrode current collector is 6 µm to 10 µm, and the thickness of the negative electrode active material layer is 30 µm to 130 µm. Optionally, the negative electrode active material layer may further include at least one of a negative electrode conductive agent, a thickener, or a negative electrode binder. Types of the negative electrode conductive agent, the thickener, and the negative electrode binder in the negative electrode active material layer are not particularly limited in this application, provided that the objective of this application can be achieved. A mass ratio of the negative electrode active material, the negative electrode conductive agent, the thickener, and the negative electrode binder in the negative electrode active material layer is not particularly limited in this application, provided that the objective of this application can be achieved. For example, the mass ratio of the negative electrode active material, the negative electrode conductive agent, the thickener, and the negative electrode binder in the negative electrode active material layer is (97-98):(0.5-1.5):(0-1.5):(1.0-1.9).

The electrochemical apparatus is not limited to any particular type in this application and may include any apparatus in which electrochemical reactions take place. For example, the electrochemical apparatus may include but is not limited to a lithium metal secondary battery, a lithium-ion secondary battery (lithium-ion battery), a sodium-ion secondary battery (sodium-ion battery), a lithium polymer secondary battery, and a lithium-ion polymer secondary battery.

A preparation method of electrochemical apparatus is not particularly limited in this application, and any preparation method well known in the art can be used, provided that the objective of this application can be achieved. For example, a preparation method of electrochemical apparatus includes but is not limited to the following steps: stacking a positive electrode plate, a separator, and a negative electrode plate in sequence, performing operations such as winding and folding as required to obtain an electrode assembly of a wound structure, placing the electrode assembly into a packaging bag, injecting an electrolyte into the packaging bag, and sealing the packaging bag to obtain an electrochemical apparatus; or stacking the positive electrode plate, the separator, and the negative electrode plate in sequence, fixing four corners of the overall stacked structure to obtain an electrode assembly of a stacked structure, placing the electrode assembly into a packaging bag, injecting an electrolyte into the packaging bag, and sealing the packaging bag to obtain an electrochemical apparatus.

A second aspect of this application provides an electronic apparatus, where the electronic apparatus includes the electrochemical apparatus according to any one of the foregoing embodiments. Therefore, the electronic apparatus has good use performance.

The electronic apparatus of this application is not particularly limited, and may be any known electronic apparatus used in the prior art. For example, the electronic apparatus may include but is not limited to a notebook computer, a pen-input computer, a mobile computer, an e-book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a storage card, a portable recorder, a radio, a standby power source, a motor, an automobile, a motorcycle, a power-assisted bicycle, a bicycle, a lighting appliance, a toy, a game console, a clock, an electric tool, a flash lamp, a camera, a large household battery, and a lithium-ion capacitor.

### Examples

The following describes some embodiments of this application more specifically by using examples and comparative examples. Various tests and evaluations are performed according to the following method.

### Test method and device:

### Test of quantity of polymer particles:

A lithium-ion battery was discharged to 3.0 V at 0.5C and then disassembled to obtain a separator; the separator was cleaned in a dimethyl carbonate solution for 5 min and then dried; a portion of the separator with an area required for a scanning electron microscope test was selected and measured using a scanning electron microscope at a magnification of 5000X, where the area was 11.5 µm × 7.5 µm,; a quantity of the polymer particles was visually measured; and 3 areas were randomly selected to obtain an average value of the quantities of the polymer particles.

### Mass percentage test of linear carboxylate and dinitrile compound:

The lithium-ion battery was discharged to 3.0 V at a constant current of 0.5C; after a packaging bag of the lithium-ion battery was opened through cutting, the cut lithium-ion battery was placed into a centrifuge tube with an opening facing down and centrifuged in the centrifuge to obtain the electrolyte; and the obtained electrolyte was tested using a gas chromatography-mass spectrometer to obtain components and mass percentages of the components of the linear carboxylate as well as components and mass percentages of the components of the dinitrile compound in the electrolyte.

### Diameter test of polymer particles:

A maximum length of a polymer particle was measured from left to right in area of 11.5 µm × 7.5 µm using a SEM at a magnification of 5000X; 16 polymer particles were continuously tested; and an average value of the 16 points was taken as the diameter of the polymer particles.

### Test of degree of swelling of polymer particles:

### (1) Preparation of adhesive film:

The lithium-ion battery was discharged to 3.0 V at a constant current of 0.5C and then disassembled; the separator was taken out and cut to obtain a sample with a size of length × width = 10 cm × 4 cm; the sample was placed in an organic solvent N-methylpyrrolidone (NMP); and the first coating was dispersed into the NMP to obtain a suspension, where a ratio of the solvent and the suspension was 1:9, and the suspension could not exceed 1/3 of a volume of a beaker;
the beaker containing the suspension was stirred on a disperser with the following parameters: stirred at 500 rpm for 30 min at the beginning, and after powder of the first coating was preliminarily dissolved, the stirring speed was increased to 1500 rpm and the suspension was stirred thoroughly for 1 h;
the stirred solution was left standing for 30 min to eliminate bubbles;
the solution was filtered using a 100-mesh filter to remove insoluble impurities and the substrate; and
the solution was poured into an adhesive film preparation mold, and if there were bubbles, the bubbles were removed in advance; and the mold was baked in an oven at 60°C for 12 h; after baking, appearance and hardness of the adhesive film were observed; and if the adhesive film was not dried completely, the adhesive film was baked again until it was dried completely.

### (2) Swelling test:

The prepared adhesive film was cut into small strips with a weight of about 2g using scissors, and each type of adhesive film was cut to obtain 3 parallel samples;
the small adhesive film strips were separately weighed, with initial weights recorded as M₁, placed in small bottles, and labeled with sample names; a test electrolyte was added until the electrolyte was 3 cm higher than the adhesive film; and the small bottles were sealed and baked in an oven at 60°C for 24 h; and
the adhesive film was taken out and wiped up with dust-free paper, and a weight M₂ of each adhesive film was recorded;
where Degree of swelling (%) = (M₂ - M₁)/M₁×100%, an average value of the 3 parallel samples was taken as a final degree of swelling data; and
the test electrolyte was the same as that in Example 1-1.

### Test of adhesion force A of first coating:

The lithium-ion battery was discharged to 3V; a packaging bag was removed; the electrode assembly was taken out; if an adhesion force between the separator and the positive electrode plate was to be tested, the lithium-ion battery was opened from the negative electrode side, an interface between the positive electrode plate and the separator was retained, the positive electrode plate and the separator were cut into small strips of 15 mm × 40 mm; and the adhesion force was tested at room temperature (25°C) according to the 180° peel test standard GBT2792-1998.

### Air permeability test:

The lithium-ion battery was discharged to 3.0 V at a constant current of 0.5C and then disassembled; the separator was taken out; portions of the separator with no positive electrode plate and no negative electrode plate were cut into separator samples with a size of length × width = 45 mm × 45 mm; and the samples were cleaned for 5 s in dimethyl carbonate (DMC), dried in air and subjected to an air permeability test.

### Test device: air permeability tester.

A power switch of a digital timer was turn on, and an "ENTER" button on an instrument panel was pressed to enter a selection screen. A test specification was s/100cm³, a bottom stopcock was loosened first, and then the air permeability tester slide barrel was lifted up and hung on a top pin. The sample was placed on a sample test platform, where the sample must cover an entire sample region. First, a RESET button was pressed (at that point, the screen displayed "TIMER SEEKING STARTING MARK"), and then the slide barrel was released to start the test. After a silver-white region completely passed through a sensor, a value displayed on the timer was read and recorded.

### Lithium precipitation amount test:

(1) The lithium-ion battery was left standing in a high and low-temperature box at -10°C for 30 min to make the lithium-ion battery reach a constant temperature; (2) the lithium ion battery reaching a constant temperature was discharged to a voltage of 2.5 V at a constant current of 0.5C; (3) after left standing for 10 min, the lithium-ion battery was charged to a voltage of 3.65 V at a constant current of 0.1C, and then charged to a current of 0.05C at a constant voltage of 3.65 V (a charge capacity C1 was recorded); (4) after left standing for 10 min, the lithium-ion battery was discharged to a voltage of 2.5 V at a constant current of 0.5C, left standing for 10min, discharged to a voltage of 2.5 V at a constant current of 0.025C, still left standing for 10 min, and discharged to a voltage of 2.5 V at a constant current of 0.005C, and a complete discharge capacity in this step was recorded as D1; (5) after left standing for 10 min, the lithium-ion battery was charged to a voltage of 3.65 V at a constant current of 0.3C, and then charged to a current of 0.05C at a constant voltage of 3.65 V; (6) after left standing for 10 min, the lithium-ion battery was discharged to a voltage of 2.5 V at a constant current of 0.5C, left standing for 10 min, discharged to a voltage of 2.5 V at a constant current of 0.025C, still left standing for 10 min, and discharged to a voltage of 2.5 V at a constant current of 0.005C; and (7) step (5) and step (6) were repeated 12 times, and the last complete discharge capacity was recorded as D12. A lithium precipitation amount was calculated and used as a basis for determining the charging performance (a smaller lithium precipitation amount indicated a slighter lithium precipitation degree, and when the lithium precipitation amount was less than 0.3, it was difficult to see lithium precipitation with naked eyes), where the lithium precipitation amount was calculated as follows: Lithium precipitation amount = (first charge capacity C1 - last discharge capacity D12)/first charge capacity C1.

The lithium precipitation amount characterizes kinetic performance, and a smaller lithium precipitation amount indicates better the kinetic performance.

### Rate performance test:

(1) The battery was placed at a temperature of 25°C;
(2) the battery was left standing for 5min;
(3) the battery was charged to 4.47 V at a constant current of 0.5C and then charged to 0.05C at a constant voltage of 4.47 V;
(4) the battery was left standing for 5min;
(5) the battery was discharged to 3.0 V at a discharge rate of XX, where discharge rate XX = {0.2C, 0.5C, 1C, 1.5C, 2C};
(6) step (2) to step (5) were repeated cyclically, where all rates were tested in turn according to rate conditions; and
(7) the battery was left standing for 5min.

Rate performance was based on a capacity at 0.2C. The rate performance of the lithium-ion batteries of the examples and comparative examples of this application was characterized by the rate performance measured at a discharge rate XX = 2C, where the rate performance at 2C = capacity at 2C/capacity at 0.2C × 100%.

### Storage performance test:

(1) The battery was left standing at a temperature of 25°C for 5 min, and an initial thickness of the battery was measured;
(2) the battery was charged to 4.5 V at a constant current of 0.5C, and charged to 0.02C at a constant voltage of 4.5 V;
(3) the battery was left standing for 5min;
(4) the battery was stored at 80°C for 42 h, with a storage voltage of 4.5 V and a state of charge SOC = 100%; and
(5) a thickness of the battery after 42 h of storage at 80°C was measured. Swelling rate (%) = (cold-measured thickness after 42 h - initial thickness)/initial thickness × 100%.

A PPG battery cell thickness gauge was used as an instrument for measuring the thickness, with a test pressure of 500 g. Cold measurement meant that the lithium-ion battery was placed at room temperature for 24 h until the temperature of the lithium-ion battery dropped to room temperature (25°C), and then tested.

The swelling rate characterizes storage performance. A lower swelling rate indicates better storage performance.

### Example 1-1

### <Preparation of separator>

PE with a thickness of 5 µm was used as the substrate, where a porosity of the substrate was 35%.

Polymer particles styrene-isobutyl acrylate copolymer (a weight-average molecular weight was 20W, and mass ratio of styrene monomer and isobutyl acrylate monomer was 80:20), an auxiliary binder sodium carboxymethyl cellulose, and a wetting agent dimethylsiloxane were added into a mixer at a mass ratio of 95:0.5:4.5, added with deionized water, and well stirred to obtain a first coating slurry with a viscosity of 40 mPa•s and a solid content of 5wt%, where a diameter of the polymer particles is 0.6 µm.

Inorganic particles boehmite, a binder acrylic acid, and a wetting agent organosiloxane were mixed, added with deionized water as a solvent, and well stirred to form a heat-resistant layer slurry with a solid content of 40wt%.

The heat-resistant layer slurry was applied onto a surface of the substrate close to the positive electrode plate, and dried at 50°C to form a heat-resistant layer; the first coating slurry was applied onto a surface of the heat-resistant layer away from the substrate, and dried at 45°C to form a separator with the first coating and heat-resistant layer provided on one side; and the first coating slurry was applied onto a surface of the substrate away from the positive electrode plate, and dried at 45°C to obtain the separator.

A coating weight of the first coating Cw = 1 mg/5000mm². A thickness of the first coating layer was 1 µm. D50 of inorganic particles = 1 µm, and D90 = 1.5 µm. Based on a mass of the heat-resistant layer, a mass percentage of the inorganic particles W₁ = 90%, a mass percentage of the binder W₂ = 5%, and a mass percentage of the wetting agent W₄ = 5%. A thickness of the heat-resistant layer C = 2 µm. An air permeability of the separator P₂ = 180 s/100cm³.

### <Preparation of positive electrode plate>

A positive electrode active material LiCoO₂, a positive electrode conductive agent conductive carbon black (Super P), and a positive electrode binder PVDF were mixed at a mass ratio of 97.5:1:1.5, added with N-methylpyrrolidone (NMP) as a solvent, and stirred in a vacuum mixer to obtain a positive electrode slurry with a solid content of 75wt% and a uniform system. The positive electrode slurry was uniformly applied onto one surface of a positive electrode current collector aluminum foil with a thickness of 10 µm, followed by drying at 85°C to obtain a positive electrode plate coated with a positive electrode active material layer (with a thickness of 50 µm) on one side. Afterwards, the foregoing steps were repeated on the other surface of the aluminum foil to obtain a positive electrode plate coated with the positive electrode active material layer on both surfaces. Then, cold pressing, cutting, and positive electrode tab welding were performed to obtain a positive electrode plate with a size of 74 mm ×851 mm for later use.

### <Preparation of negative electrode plate>

A negative electrode active material graphite, a negative electrode conductive agent Super P, a thickener carboxymethyl cellulose, and a binder styrenebutadiene rubber (SBR) were mixed at a mass ratio of 97.5:1:0.5:1, then added with deionized water as a solvent, and stirred in a vacuum mixer to obtain a negative electrode slurry with a solid content of 50wt% and a uniform system. The negative electrode slurry was uniformly applied onto a surface of a negative electrode current collector copper foil with a thickness of 8 µm, and dried at 85°C to obtain a negative electrode plate coated with a negative electrode active material layer (with a thickness of 60 µm) on one side. The foregoing steps were repeated on the other surface of the copper foil to obtain a negative electrode plate coated with the negative electrode active material layer on both surfaces. Then, cold pressing, cutting, and negative electrode tab welding were performed to obtain a negative electrode plate with a size of 76 mm ×867 mm for later use.

### <Preparation of electrolyte>

In an environment with a moisture of less than 10 ppm, ethylene carbonate (EC) and ethyl methyl carbonate (EMC) were well mixed at a mass ratio of 1:1 to form a base solvent, then linear carboxylate propyl propionate as well as additives vinylene carbonate and 1,3-propane sultone were added into the base solvent; then a lithium salt LiPF₆ was added and dissolved; and the resulting mixture was well mixed to obtain an electrolyte. Based on a mass of the electrolyte, a mass percentage B of the linear carboxylate was 5%, a mass percentage of the vinylene carbonate was 1%, a mass percentage of the 1,3-propane sultone was 3%, a mass percentage of the LiPF₆ was 12.5%, and the remainder was EC and EMC.

### <Preparation of lithium-ion battery>

The prepared negative electrode plate, separator, and positive electrode plate were stacked in sequence and wound to obtain an electrode assembly of a wound structure. The electrode assembly was placed into an aluminum-plastic film packaging bag and dried, and then the electrolyte was injected, followed by processes such as vacuum sealing, standing, formation, measuring capacity, degassing, and trimming, to obtain a lithium-ion battery.

### Examples 1-2 to 1-5

These examples were the same as Example 1-1 except that the related preparation parameters were adjusted according to Table 1.

When the mass percentage B of the linear carboxylate changed, the mass percentages of the EC and EMC changed accordingly at a mass ratio of 1:1, the mass percentages of the vinylene carbonate, 1,3-propane sultone, and LiPF₆ remained unchanged, and a sum of the mass percentages of the linear carboxylate, EC, EMC, vinylene carbonate, 1,3-propane sultone, and LiPF₆ was 100%.

### Examples 1-6 to 1-8

These examples were the same as Example 1-2 except that the related preparation parameters were adjusted according to Table 1.

### Example 1-9

These examples were the same as Example 1-8 except that the type and percentage of the linear carboxylate were adjusted according to Table 1.

When the mass percentage B of the linear carboxylate changed, the mass percentages of the EC and EMC changed accordingly at a mass ratio of 1:1, the mass percentages of the vinylene carbonate, 1,3-propane sultone, and LiPF₆ remained unchanged, and a sum of the mass percentages of the linear carboxylate, EC, EMC, vinylene carbonate, 1,3-propane sultone, and LiPF₆ was 100%.

### Examples 1-10 to 1-13

These examples were the same as Example 1-2 except that the related preparation parameters were adjusted according to Table 1.

### Example 1-14 and Example 1-15

These examples were the same as Example 1-10 except that the related preparation parameters were adjusted according to Table 1.

When the mass percentage B of the linear carboxylate changed, the mass percentages of the EC and EMC changed accordingly at a mass ratio of 1:1, the mass percentages of the vinylene carbonate, 1,3-propane sultone, and LiPF₆ remained unchanged, and a sum of the mass percentages of the linear carboxylate, EC, EMC, vinylene carbonate, 1,3-propane sultone, and LiPF₆ was 100%.

### Examples 2-1 to 2-3

These examples were the same as example 1-9 except that the related preparation parameters were adjusted according to Table 2.

### Example 2-4 to Example 2-7

These examples were the same as Example 2-1 except that the related preparation parameters were adjusted according to Table 2.

When the mass percentages of the linear carboxylate butyl butyrate and ethyl acetate changed, the mass percentages of the EC and EMC changed accordingly at a mass ratio of 1:1, the mass percentages of the vinylene carbonate, 1,3-propane sultone, and LiPF₆ remained unchanged, and a sum of the mass percentages of the linear carboxylate, EC, EMC, vinylene carbonate, 1,3-propane sultone, and LiPF₆ was 100%.

### Examples 3-1 to 3-8

These examples were the same as Example 1-9 except in the <Preparation of electrolyte>, the base solvent was further added with the types and percentages of dinitrile compounds shown in Table 3.

After the dinitrile compounds were added, the mass percentages of the EC and EMC changed accordingly at a mass ratio of 1:1, the mass percentages of the linear carboxylate, vinylene carbonate, 1,3-propane sultone, and LiPF₆ remained unchanged, and a sum of the mass percentages of the dinitrile compound, linear carboxylate, EC, EMC, vinylene carbonate, 1,3-propane sultone, and LiPF₆ was 100%.

### Comparative example 1 and Comparative example 2

These examples were the same as Example 1-2 except that the related preparation parameters were adjusted according to Table 1.

### Comparative example 3 and Comparative example 4

These examples were the same as Example 1-15 except that the related preparation parameters were adjusted according to Table 1.

When the mass percentage B of the linear carboxylate changed, the mass percentage of EC and EMC changed accordingly at a mass ratio of 1:1, the mass percentages of the vinylene carbonate, 1,3-propane sultone, and LiPF₆ remained unchanged, and a sum of the mass percentages of the linear carboxylate, EC, EMC, vinylene carbonate, 1,3-propane sultone, and LiPF₆ was 100%.

The preparation parameters and performance parameters of the examples and comparative examples are shown in Table 1 and Table 3.

**Table 1**

| | Linear carboxylate | B | Q (Quantity) | Lithium precipitation amount (mg) | Storage performance (%) |
|---|---|---|---|---|---|
| Example 1-1 | Propyl propionate | 5% | 20 | 3.2 | 6.7 |
| Example 1-2 | Propyl propionate | 13% | 20 | 2.6 | 6.8 |
| Example 1-3 | Propyl propionate | 21% | 20 | 2.1 | 7.0 |
| Example 1-4 | Propyl propionate | 37% | 20 | 1.7 | 7.1 |
| Example 1-5 | Propyl propionate | 50% | 20 | 1.3 | 7.3 |
| Example 1-6 | Propyl propionate | 13% | 10 | 1.1 | 7.5 |
| Example 1-7 | Propyl propionate | 13% | 30 | 2.7 | 6.3 |
| Example 1-8 | Propyl propionate | 13% | 40 | 2.8 | 3.2 |
| Example 1-9 | Propyl propionate + ethyl acetate | 15% + 15% | 40 | 2.9 | 4.2 |
| Example 1-10 | Propyl propionate | 13% | 42 | 3.1 | 3.1 |
| Example 1-11 | Propyl propionate | 13% | 51 | 3.6 | 2.9 |
| Example 1-12 | Propyl propionate | 13% | 80 | 5.4 | 2.1 |
| Example 1-13 | Propyl propionate | 13% | 90 | 5.7 | 1.9 |
| Example 1-14 | Propyl propionate + ethyl propionate | 13% + 10% | 42 | 3.5 | 3.0 |
| Example 1-15 | Ethyl propionate | 23% | 42 | 3.9 | 2.9 |
| Comparative example 1 | Propyl propionate | 13% | 8 | 0.6 | 8.9 |
| Comparative example 2 | Propyl propionate | 13% | 95 | 7.9 | 1.8 |
| Comparative example 3 | Ethyl propionate | 2% | 42 | 6.2 | 3.3 |
| Comparative example 4 | Ethyl propionate | 55% | 42 | 6.3 | 5.8 |

It can be seen from Examples 1-1 to 1-15 and Comparative examples 1 to 4 that for the lithium-ion batteries in the embodiments of this application, the quantity Q of the polymer particles in the first coating of the separator and the percentage B of the linear carboxylate in the electrolyte are regulated within the ranges provided in this application, enabling the first coating and the linear electrolyte to work synergistically; and the lithium-ion batteries have a lithium precipitation amount of less than 6.0 mg and storage performance of less than or equal to 7.5%, indicating that the lithium-ion batteries in the embodiments of this application have high kinetic performance and storage performance. However, for the lithium-ion batteries in the comparative examples, the quantity Q of the polymer particles in the first coating or the percentage B of the linear carboxylate in the electrolyte is not within the ranges provided in this application, and the lithium precipitation amount of the lithium-ion batteries is greater than or equal to 6.0 mg or the storage performance is greater than 8%, failing to balance the kinetic performance and storage performance.

The percentage B and type of the carboxylate in the electrolyte typically affect the kinetic performance and storage performance of the lithium-ion batteries. It can be seen from Examples 1-1 to 1-5, Example 1-9, Example 1-14, Example 1-15, Comparative example 3, and Comparative example 4 that the lithium-ion batteries in which the percentage B and type of the carboxylate in the electrolyte are within the ranges provided in this application have good kinetic performance and storage performance.

The quantity Q of the polymer particles in the first coating typically affects the kinetic performance and storage performance of the lithium-ion batteries. It can be seen from Example 1-2, Examples 1-6 to 1-8, Examples 1-10 to 1-13, Comparative example 1, and Comparative example 2 that the lithium-ion batteries in which the quantity Q of the polymer particles in the first coating is within the ranges provided in this application have good kinetic performance and storage performance.

**Table 2**

| | Percentage B of linear carboxylate | Type of polymer particles | Diameter of polymer particles (µm) | Q (Quantity) | P₁ (s/100cm³) | P₂ - P₁ (s/100cm³) | Degree of swelling (%) | A (N/m) | A/B | Lithium precipitation amount (mg) | Rate performance (%) | Storage performance (%) |
|---|---|---|---|---|---|---|---|---|---|---|---|---|
| Example 1-9 | 15% + 15% | Styrene-isobutyl acrylate copolymer (N = 80:20) | 1 | 40 | 150 | 28 | 100 | 10.5 | 35 | 2.9 | 91.2 | 4.2 |
| Example 2-1 | 15% + 15% | Styrene-isobutyl acrylate copolymer (N = 80:20) | 0.2 | 40 | 150 | 30 | 100 | 12.1 | 40 | 3.7 | 80.1 | 3.4 |
| Example 2-2 | 15% + 15% | Styrene-isobutyl acrylate copolymer (N = 80:20) | 2 | 40 | 150 | 25 | 100 | 7.6 | 25 | 2.4 | 92.3 | 5.8 |
| Example 2-3 | 15% + 15% | Styrene-isobutyl acrylate copolymer (N = 80:20) | 3 | 12 | 150 | 21 | 100 | 5.8 | 19 | 1.9 | 93.1 | 6.1 |
| Example 2-4 | 15% + 15% | Styrene-isobutyl acrylate copolymer (N = 70:30) | 1 | 40 | 150 | 15 | 120 | 10.6 | 35 | 3.4 | 90.3 | 3.5 |
| Example 2-5 | 15% + 15% | Styrene-isobutyl acrylate copolymer (N = 60:40) | 1 | 40 | 150 | 15 | 132 | 11.2 | 37 | 3.8 | 89.5 | 3.3 |
| Example 2-6 | 20% + 20% | Styrene-isobutyl acrylate copolymer (N = 80:20) | 1 | 40 | 150 | 15 | 100 | 11.5 | 29 | 3.4 | 89.8 | 3.6 |
| Example 2-7 | 10% + 10% | Styrene-isobutyl acrylate copolymer (N = 80:20) | 1 | 40 | 150 | 15 | 100 | 10.8 | 54 | 3.1 | 89.2 | 3.2 |

| | | | | | | | | | | | | |
|---|---|---|---|---|---|---|---|---|---|---|---|---|
| Note: In Table 2, "N" indicates a mass ratio of the styrene monomer and the isobutyl acrylate monomer in the styrene-isobutyl acrylate copolymer. | | | | | | | | | | | | |

The diameter of polymer particles typically affects the kinetic performance, rate performance, and storage performance of lithium-ion batteries. It can be seen from Example 1-9 and Examples 2-1 to 2-3 that the lithium-ion batteries in which the diameter of the polymer particles is within the ranges provided in this application have good kinetic performance, rate performance, and storage performance.

The type of polymer particles typically affects the kinetic performance, rate performance, and storage performance of lithium-ion batteries. It can be seen from Example 2-1, Example 2-4, and Example 2-5 that the lithium-ion batteries in which the type of the polymer particles is within the ranges provided in this application have good kinetic performance, rate performance, and storage performance.

The percentages of different carboxylates in the electrolyte typically affect the kinetic performance, rate performance, and storage performance of lithium-ion batteries. It can be seen from Example 1-9, Example 2-6, and Example 2-7 that the lithium-ion batteries in which the percentages of different carboxylates in the electrolyte are within the ranges provided in this application have good kinetic performance, rate performance, and storage performance.

A difference value P₂ - P₁ between the air permeability P₂ of the separator and the air permeability P₁ of the substrate typically affects the kinetic performance, rate performance, and storage performance of lithium-ion batteries. It can be seen from Example 1-9 and Examples 2-1 to 2-3 that the lithium-ion batteries in which the difference value P₂ - P₁ between the air permeability P₂ of the separator and the air permeability P₁ of the substrate is within the ranges provided in this application have good kinetic performance, rate performance, and storage performance.

**Table 3**

| | Linear carboxylate | B | Dinitrile compound | Wₑ | Lithium precipitation amount (mg) | Rate performance (%) | Storage performance (%) |
|---|---|---|---|---|---|---|---|
| Example 1-9 | Propyl propionate + ethyl acetate | 15% + 15% | \ | \ | 2.9 | 91.2 | 4.2 |
| Example 3-1 | Propyl propionate + ethyl acetate | 15% + 15% | Succinonitrile + adiponitrile | 0.25% + 0.25% | 2.1 | 92.5 | 2.4 |
| Example 3-2 | Propyl propionate + ethyl acetate | 15% + 15% | Succinonitrile + adiponitrile | 0.5% + 0.5% | 2.2 | 92.3 | 3.1 |
| Example 3-3 | Propyl propionate + ethyl acetate | 15% + 15% | Succinonitrile + adiponitrile | 1% + 1% | 2.4 | 92.1 | 4.2 |
| Example 3-4 | Propyl propionate + ethyl acetate | 15% + 15% | Succinonitrile + adiponitrile | 1.5% + 1.5% | 2.8 | 91.8 | 4.9 |
| Example 3-5 | Propyl propionate + ethyl acetate | 15% + 15% | Succinonitrile + adiponitrile | 2% + 2% | 2.7 | 91.5 | 4.0 |
| Example 3-6 | Propyl propionate + ethyl acetate | 15% + 15% | Succinonitrile + adiponitrile | 2.5% + 2.5% | 2.6 | 91.3 | 4.1 |
| Example 3-7 | Propyl propionate + ethyl acetate | 15% + 15% | Glutaronitrile | 2% | 2.3 | 91.4 | 3.8 |
| Example 3-8 | Propyl propionate + ethyl acetate | 15% + 15% | Adiponitrile | 2% | 2.5 | 91.6 | 4.2 |

| | | | | | | | |
|---|---|---|---|---|---|---|---|
| Note: "\" in Table 3 indicates that there is no corresponding parameter. | | | | | | | |

It can be seen from Example 1-9 and Examples 3-1 to 3-8 that further adding the dinitrile compound to the electrolyte can make the lithium-ion batteries have good rate performance while having good kinetic performance and storage performance.

The percentage of the dinitrile compound in the electrolyte typically affects the kinetic performance, rate performance, and storage performance of lithium-ion batteries. It can be seen from Example 1-3 and Examples 3-1 to 3-6 that the lithium-ion batteries in which the percentage of the dinitrile compound in the electrolyte is within the ranges provided in this application have good kinetic performance, rate performance, and storage performance.

The type of the dinitrile compound in the electrolyte typically affects the kinetic performance, rate performance, and storage performance of lithium-ion batteries. It can be seen from Example 3-3, Example 3-7, and Example 3-8 that the lithium-ion batteries in which the type of the dinitrile compound in the electrolyte is within the ranges provided in this application have good kinetic performance, rate performance, and storage performance.

It should be noted that in this specification, the relational terms such as "first" and "second" are only used to distinguish one entity or operation from another entity or operation, and do not necessarily require or imply that there is any such actual relationship or order between these entities or operations. In addition, the terms "comprise", "include", or any other variations thereof are intended to cover non-exclusive inclusions, such that a process, method, article or device including a series of elements not only includes these elements, but also includes other elements which are not expressly listed, or further includes elements which are inherent to such process, method, article or device.

All embodiments in this specification are described in a related manner. For a part that is the same or similar between some embodiments, reference may be made between some embodiments. Each embodiment focuses on differences from other embodiments.

The foregoing descriptions are merely preferred embodiments of this application, and are not intended to limit this application. Any modifications, equivalent replacements, improvements, and the like made without departing from the spirit and principle of this application shall fall within the protection scope of this application.

## Claims

1. An electrochemical apparatus, comprising: an electrolyte, a positive electrode plate, a negative electrode plate, and a separator; **characterized in that**, the separator is disposed between the positive electrode plate and the negative electrode plate, the separator comprises a substrate and a first coating provided on both surfaces of the substrate, and the first coating comprises polymer particles; wherein
in an 11.5 µm × 7.5 µm region of a surface of the first coating, a quantity Q of the polymer particles is 10 to 90;
the electrolyte comprises substituted or unsubstituted C₃-C₈ linear carboxylate, and in a case of substitution, a substituent group is selected from halogen atoms; and
a mass percentage B of the linear carboxylate is 5% to 50% based on a mass of the electrolyte.

2. The electrochemical apparatus according to claim 1, **characterized in that**, in the 11.5 µm × 7.5 µm region of the surface of the first coating, the quantity Q of the polymer particles is 30 to 80.

3. The electrochemical apparatus according to claim 1, **characterized in that**, the polymer particles have a diameter of 0.2 µm to 3 µm.

4. The electrochemical apparatus according to claim 1, **characterized in that**, each polymer particle is formed by polymerization of at least two of the following monomers: butadiene, methyl acrylate, methyl methacrylate, styrene, butyl methacrylate, isobutyl acrylate, ethylhexyl acrylate, ethylene, propylene, vinylidene fluoride.

5. The electrochemical apparatus according to claim 1, **characterized in that**, a degree of swelling of the polymer particles in a test electrolyte is 100% to 135%.

6. The electrochemical apparatus according to claim 1, **characterized in that**, the linear carboxylate comprises at least one of methyl acetate, ethyl acetate, butyl butyrate, propyl acetate, ethyl propionate, propyl propionate, butyl propionate, pentyl propionate, methyl fluoroacetate, ethyl fluoroacetate, or ethyl chloroacetate.

7. The electrochemical apparatus according to claim 1, **characterized in that**, an air permeability P₁ of the substrate is 50 s/100cm³ to 200 s/100cm³, and an air permeability P₂ of the separator and the air permeability P₁ of the substrate satisfy: 15 s/100cm³ ≤ P₂ - P₁ ≤ 30 s/100cm³.

8. The electrochemical apparatus according to claim 1, **characterized in that**, the value of an adhesion force A of the first coating and the mass percentage B of the linear carboxylate satisfy: 10 ≤ A/B ≤ 60.

9. The electrochemical apparatus according to claim 1, **characterized in that**, the electrolyte further comprises a dinitrile compound; and the dinitrile compound comprises at least one of succinonitrile, glutaronitrile, methylglutaronitrile, adiponitrile, pimelonitrile, suberonitrile, azelonitrile, or sebaconitrile; wherein
a mass percentage of the dinitrile compound is 0.5% to 5% based on a mass of the electrolyte.

10. The electrochemical apparatus according to claim 1, **characterized in that**, in the 11.5 µm × 7.5 µm region of the surface of the first coating, the quantity Q of the polymer particles is 10 to 51.

11. An electronic apparatus, **characterized in that**, the electronic apparatus comprises an electrochemical apparatus; the electrochemical apparatus comprises an electrolyte, a positive electrode plate, a negative electrode plate, and a separator; wherein the separator is disposed between the positive electrode plate and the negative electrode plate, the separator comprises a substrate and a first coating provided on both surfaces of the substrate, and the first coating comprises polymer particles; wherein
in an 11.5 µm × 7.5 µm region of a surface of the first coating, a quantity Q of the polymer particles is 10 to 90;
the electrolyte comprises substituted or unsubstituted C3-C8 linear carboxylate, and in a case of substitution, a substituent group is selected from halogen atoms; and
a mass percentage B of the linear carboxylate is 5% to 50% based on a mass of the electrolyte.

12. The electronic apparatus according to claim 11, **characterized in that**, in the 11.5 µm × 7.5 µm region of the surface of the first coating, the quantity Q of the polymer particles is 30 to 80.

13. The electronic apparatus according to claim 11, **characterized in that**, the polymer particles have a diameter of 0.2 µm to 3 µm.

14. The electronic apparatus according to claim 11, **characterized in that**, each polymer particle is formed by polymerization of at least two of the following monomers: butadiene, methyl acrylate, methyl methacrylate, styrene, butyl methacrylate, isobutyl acrylate, ethylhexyl acrylate, ethylene, propylene, vinylidene fluoride.

15. The electronic apparatus according to claim 11, **characterized in that**, the electronic apparatus comprises the electrochemical apparatus according to any one of claims 5 to 10.
